# EUROPÄISCHE PATENTSCHRIFT

(11) **EP 1 154 309 B1**
(45) Veröffentlichungstag und Bekanntmachung des Hinweises auf die Patenterteilung: **29.01.2003**
(21) Anmeldenummer: 01107431.7
(22) Anmeldetag: 27.03.2001
(51) Int. Cl.: G02F 1/1347, B60K 37/00

(54) **Flüssigkristallanzeigevorrichtung aus zwei Flüssigkristallanzeigezellen mit Farbkompensation durch die hintere Zelle**
Liquid crystal display device comprising two liquid crystal display cells with colour compensation by rear cell
Dispositif d'affichage à cristal liquide comprenant d'une paire de cellules d'affichage à cristal liquide avec compensation de la couleur au moyen de la cellule arrière

(30) Priorität: 12.05.2000 DE 10023282
(43) Veröffentlichungstag der Anmeldung: 14.11.2001
(73) Patentinhaber: Siemens Aktiengesellschaft, 80333 München (DE)
(72) Erfinder: Brandt, Peter, 63739 Aschaffenburg (DE); Tippl, Dietmar, 63110 Rodgau-Dudenhofen (DE)

(56) Entgegenhaltungen:
- EP-A- 0 990 874
- US-A- 4 813 770
- US-A- 5 457 551
- PATENT ABSTRACTS OF JAPAN vol. 1995, no. 11, 26. Dezember 1995 (1995-12-26) & JP 07 230087 A (FUJITSU LTD), 29. August 1995 (1995-08-29)

## Beschreibung

Die Erfindung betrifft eine Flüssigkristallanzeige, insbesondere in einem Kraftfahrzeug, bei der räumlich hintereinander zwei aktive Flüssigkristallzellen zur Darstellung von Informationen angeordnet sind.

Flüssigkristallanzeigen der vorstehenden Art sind als DSTN-Displays bekannt. Üblicherweise wird dabei in einer Flüssigkristallzelle eine Dotmatrix dargestellt, während in der zweiten Flüssigkristallzelle Segmente angezeigt werden, die sich in der ersten Zelle wegen der geringen Auflösung nur schwer darstellen lassen. Derartige Anzeigen sind aus EP 0 990 874 bekannt. Sie ermöglichen die Darstellung von Informationen mit hoher Informationschichte. Die Integration eines Farbfilters in einem DSTN-Display führt zu Problemen. Deshalb werden bislang DSTN-Displays mit zwei aktiven Zellen nur zur Darstellung mit monochromatischer Hintergrundbeleuchtung benutzt.

Es sind auch schon reflektive Farbdisplays, sogenannte ECB-Displays bekannt, die durch Variation der Ansteuerspannung und einer daraus resultierenden Änderung des Brechungsindexes eine farbige Darstellung erlauben. Derartige Anzeigen sind aus US 4 813 770 bekannt, das die Merkmale des Oberbegriffs von Anspruch 1 offenbart. Hierzu wird die Position der Polarisationsellipsen für die einzelnen Farben durch Verwendung von Retarderfolien mit einem angepassten Brechungsindex festgelegt. Aus JP 07 230 087 ist bekannt, dass bei solchen Anzeigen auch eine weitere Flüssigkristallzelle zur Farbkompensation eingesetzt werden kann. Nachteilig bei solchen Farbdisplays ist es, dass für manche Anwendungen keine ausreichend hohe Auflösung zu erreichen ist, um die erforderliche Informationsdichte zu verwirklichen.

Der Erfindung liegt das Problem zugrunde, eine Flüssigkristallanzeige der eingangs genannten Art so auszubilden, dass eine farbige Anzeige mit hoher Informationsdichte möglich wird.

Dieses Problem wird erfindungsgemäß dadurch gelöst, dass beide Flüssigkristallzellen zur farbigen Darstellung von Informationen durch Variation der Ansteuerspannung ausgebildet sind und die zweite Flüssigkristallzelle zugleich der Farbkompensation der ersten Flüssigkristallzelle dient.

Bei einer solchen Flüssigkristallanzeige wird die bei reflektiven Farbdisplays erforderliche Retarderfolie durch eine zweite Flüssigkristallzelle ersetzt, die gleiche optische Eigenschaften hat wie die Retarderfolie und gleichzeitig einen anderen Brechungsindex zeigt wie die erste Flüssigkristallzelle. Dank der Erfindung lassen sich in beiden Flüssigkristallzellen farbige Segmentdarstellungen verwirklichen. Dieses ist vor allem in Kraftfahrzeugen von Vorteil, da so - die Verkehrssicherheit erhöhend - eine große Anzahl von Informationen sehr gut und einfach ablesbar darstellbar ist und zugleich eine auch in Großserienproduktion leicht und kostengünstig herstellbare Anzeige vorliegt.

Besonders optimal werden die Möglichkeiten eines solchen reflektiven Farbdisplay genutzt, wenn gemäß einer Weiterbildung der Erfindung die rückwärtige Flüssigkristallzelle zur Anzeige von Segmenten hoher Auflösung und die erste Flüssigkristallanzeige zur Anzeige einer Dotmatrix ausgebildet ist.

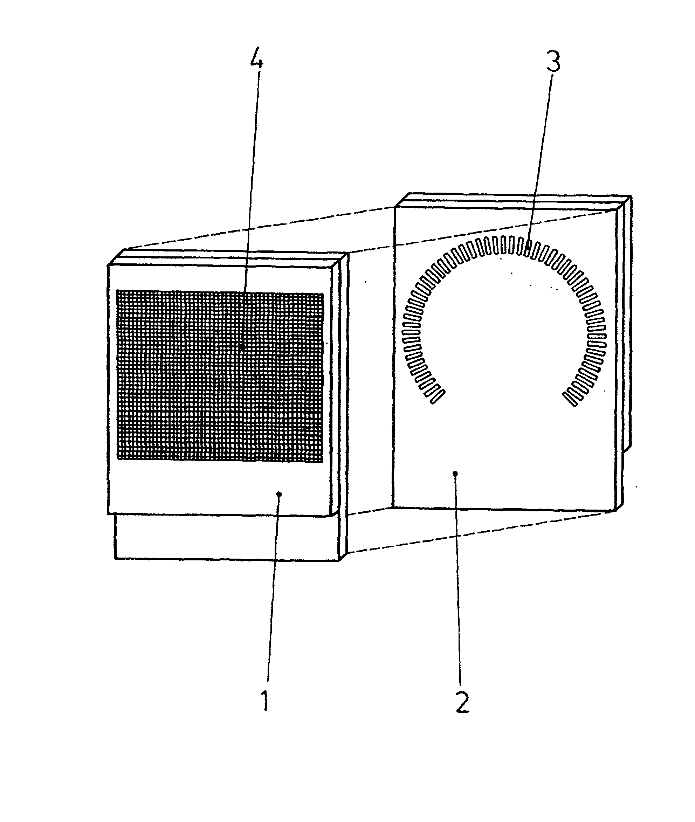

Zur weiteren Verdeutlichung der Erfindung ist in der Zeichnung eine erfindungsgemäße Flüssigkristallanzeige in Explosionsdarstellung wiedergegeben und wird nachfolgend erläutert.

Die Zeichnung zeigt zwei Flüssigkristallzellen 1, 2 in ECB-Technologie, bei denen durch unterschiedliche Ansteuerungsspannungen jeweils eine farbige Darstellung möglich ist. Im zusammengebauten Zustand liegen beide Flüssigkristallzellen 1, 2 plan aufeinander. Die rückwärtige Flüssigkristallzelle 2 wird so angesteuert, dass sie zugleich der Farbkompensation dient. Die rückwärtige Flüssigkristallzelle 2 dient der Darstellung farbiger Segmente 3, während die erste Flüssigkristallzelle 1 zur Darstellung einer Dotmatrix 4 ausgebildet ist.

## Patentansprüche

1. Flüssigkristallanzeige, insbesondere in einem Kraftfahrzeug, bei der räumlich hintereinander zwei aktive Flüssigkristallzellen (1, 2) zur Darstellung von Informationen angeordnet sind und beide Flüssigkristallzellen (1, 2) zur farbigen Darstellung von Informationen durch Variation der Ansteuerspannung ausgebildet sind, **dadurch gekennzeichnet, dass** die zweite Flüssigkristallzelle (2) zugleich zur Farbkompensation der ersten Flüssigkristallzelle (1) ausgebildet ist.

2. Flüssigkristallanzeige nach Anspruch 1, **dadurch gekennzeichnet, dass** die rückwärtige Flüssigkristallzelle (2) zur Anzeige von Segmenten (3) hoher Auflösung und die erste Flüssigkristallanzeige (1) zur Anzeige einer Dotmatrix (4) ausgebildet ist.

## Claims

1. Liquid crystal display, in particular in a motor vehicle, in which two active liquid crystal cells (1, 2) for representing information are arranged spatially one behind the other, and both liquid crystal cells (1, 2) are designed to represent information in colour by varying the drive voltage, **characterized in that** the second liquid crystal cell (2) is designed at the same time to perform colour compensation of the first liquid crystal cell (1).

2. Liquid crystal display according to Claim 1, **characterized in that** the rear liquid crystal cell (2) is designed to display segments (3) with a high resolution and the first liquid crystal display (1) is designed to display a dot matrix (4).

## Revendications

1. Affichage à cristaux liquides, en particulier dans un véhicule automobile, dans le cas duquel deux cellules à cristaux liquides (1, 2) actives, sont disposées dans l'espace l'une derrière l'autre, pour représenter des informations, et les deux cellules à cristaux liquides (1, 2) sont réalisées pour une représentation en couleur d'informations par variation de la tension de commande,
**caractérisé en ce que** la deuxième cellule à cristaux liquides (2) est, en même temps, réalisée pour la compensation des couleurs de la première cellule à cristaux liquides (1).

2. Affichage à cristaux liquides suivant la revendication 1, **caractérisé en ce que** la cellule à cristaux liquides (2) placée à l'arrière est réalisée pour l'affichage de segments (3) de haute résolution et **en ce que** la première cellule à cristaux liquides (1) est réalisée pour l'affichage d'une matrice de points (4).
